(19) Europäisches Patentamt
European Patent Office
Office européen des brevets

(11) Veröffentlichungsnummer: **0 276 765 B1**

(12) **EUROPÄISCHE PATENTSCHRIFT**

(45) Veröffentlichungstag der Patentschrift: **27.12.90**

(51) Int. Cl.[5]: **C01G 49/00,** G11B 5/706

(21) Anmeldenummer: **88100885.8**

(22) Anmeldetag: **22.01.88**

(54) **Feststoff zur Herstellung hexagonaler Ferrite.**

(30) Priorität: **24.01.87 DE 3702036**

(43) Veröffentlichungstag der Anmeldung:
**03.08.88 Patentblatt 88/31**

(45) Bekanntmachung des Hinweises auf die Patenterteilung:
**27.12.90 Patentblatt 90/52**

(84) Benannte Vertragsstaaten:
**AT DE FR GB IT NL**

(56) Entgegenhaltungen:
**EP-A- 0 052 210**
**EP-A- 0 072 436**
**EP-A- 0 136 599**
**US-A- 3 542 685**
**US-A- 3 716 630**
**US-A- 3 793 443**
**US-A- 4 569 775**

(73) Patentinhaber: **BASF Aktiengesellschaft,**
**Carl-Bosch-Strasse 38, D-6700 Ludwigshafen(DE)**

(72) Erfinder: **Mair, Gunther, Dr., Corneliusstrasse 15,**
**D-6800 Mannheim 25(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Feststoff zur Herstellung hexagonaler Ferrite, bestehend aus einem homogenen Gemisch der Kationen der Zusammensetzung (I) und wenigstens einem Anion, das zumindest ein thermisch zersetzliches Anion umfaßt. Verfahren zur Herstellung dieses Feststoffs sowie seine Verwendung zur Herstellung hexagonaler Ferrite.

Die Herstellung hexagonaler Ferrite insbesondere substituierter Ferrite vom Barium-, Strontium- oder Bleiferrit-Typ ist bekannt. Sie erfolgt üblicherweise nach dem keramischen Verfahren. Dazu werden meist Barium- oder Strontiumkarbonat, Eisenoxid sowie Verbindungen der weiteren Elemente in dem Verhältnis, das der chemischen Formel des späteren Ferrits entspricht, gemischt und diese Mischung bei Temperaturen bis zu 1300°C gesintert. Das entstandene Produkt wird anschließend, meist unter Zusatz von Wasser, zu einem Pulver gemahlen. Diese Aufarbeitung bewirkt jedoch eine starke Verbreiterung des Teilchengrößenspektrums, was sich auf die magnetischen Eigenschaften, insbesondere auf die Einheitlichkeit der Schaltfeldstärke in nicht unerheblichem Maße nachteilig auswirkt.

Weiterhin sind zur Herstellung der genannten Ferrite Fluxverfahren bekannt, bei denen Flußmittel zur Förderung der Reaktion zwischen den einzelnen Metalloxiden eingesetzt werden, wie z.B. Alkalihalogenide und -sulfate. So wird nach der US-A 3 793 433 Bariumferrit durch Erhitzen eines $BaCO_3$-FeOOH-NaCl-KCl-Gemenges hergestellt. In ähnlicher Weise wird gemäß US-A 4 401 643 vorgegangen. Dort werden zur Herstellung von Bariumferrit die löslichen Chloride der Metallkomponenten mit Natriumkarbonat ausgefällt und nach dem Trocknen in Gegenwart des dabei gebildeten Natriumchlorids gesintert.

Bei diesen Alkalichlorid- und Alkalisulfatfluxverfahren werden Salz-Ferrit-Gemenge als kompakte, massive und harte Schmelzkuchen erhalten, deren Salzanteil anschließend zur Isolierung des Ferrits durch Aufschlämmen in Wasser aufgelöst wird. Nachteilig an diesen Verfahren ist die teilweise hohe Schmelztemperatur. Außerdem sind die resultierenden Ferritteilchen oft sehr grobteilig mit spezifischen Oberflächen unter 20 $m^2/g$.

Auf ähnliche Art werden Ferrite nach dem sogennannten Glasverfahren erhalten. Dazu werden Oxide der ferritbildenden Metalle zusammen mit einer Glasbildungssubstanz, z.B. Borate, Phosphate, Silikate aufgeschmolzen, dann die Schmelze zu einem im wesentlichen nicht kristallinen Glas abgeschreckt, daraufhin die Glasmasse getempert, damit sich eine ferritische Phase bilden kann und schließlich die Glassubstanz z.B. mit einer schwachen Säure aufgelöst, so daß die Ferritteilchen zurückbleiben (u.a. DE-A 2 026 736, US-A 4 569 775, EP-A 136 599). Diese Verfahren haben jedoch den Nachteil, daß sie sich sehr aufwendig gestalten un zum Aufschmelzen der Oxide sehr hohe Temperaturen erforderlich sind.

Aufgabe der Erfindung war es, hexagonale Ferrite bereitzustellen, welche sich neben einer durch Substitutionsart und -grad leicht einstellbaren Koerzitivfeldstärke durch eine gleichzeitig hohe Sättigungsmagnetisierung und geringe Teilchengröße auszeichnen. Des weiteren war es Aufgabe der Erfindung einen Weg aufzuzeigen, auf welche Weise substituierte hexagonale Ferrite mit den angegebenen Eigenschaften erhalten werden können.

Es wurde nun gefunden, daß sich die hexagonalen Ferrite mit den aufgabengemäß geforderten Eigenschaften mit einem Feststoff, bestehend aus einem homogenen Gemisch der Kationen in der Zusammensetzung (I)

$$M^{2+}[Fe_{(12-2x/3-py/3)}(Me^{2+})_x(Ma^{p+})y]_m[(M^{2+})_zB]_n \quad (I)$$

in der

M = Ba, Sr, Pb
Me = Co, Zn, Ni, Mn, Cu
Ma = Ti, Zr, Hf, Ge, V, Nb, In
p = 3, 4, 5
x = 0-3
y = 0-3
z = 0,2-3
m = 0,7-1,5
n = 0,04-10

bedeuten, und wenigstens einem Anion, das zumindest ein thermisch zersetzliches Anion umfaßt, erhalten lassen.

Des weiteren sind Verfahren zur Herstellung dieses Feststoffs sowie dessen Verwendung zur Herstellung der hexagonalen Ferrite Gegenstand der Erfindung.

Diese Verfahren zur Herstellung des Feststoffs werden so durchgeführt, daß zuerst die löslichen Salze in der für den vorgesehen hexagonalen Ferrit erforderlichen Zusammensetzung sowie ein zusätzlicher Anteil des $M^{2+}$-Katons, im allgemeinen Bariumionen, in Wasser gelöst und mittels einer Base, z.B. von NaOH und/oder $Na_2CO_3$, ausgefällt werden, dann der Niederschlag abgetrennt und gewaschen und schließlich in einer Lösung von Borsäure dispergiert wird. Aus dieser Dispersion wird das Wasser, z.B. durch Sprühtrocknung, entfernt. Das daraus resultierende erfindungsgemäße Feststoff besteht aus agglomerierten Teilchen und enthält außer den thermisch zersetzlichen Anionen alle Bestandteile des vorgesehenen hexagonalen Ferrits zusammen mit einer M-Borat-Glaskomponente.

Wird nun dieser Feststoff bei 400 bis 900°C, insbesondere bei 600 bis 800°C gesintert, dann bilden sich die gewünschten Ferritteilchen in einer amorphen Glasmatrix. Durch das beim bekannten Glasverfahren übliche Auflösen der Glasmatrix mittels schwacher Säuren, wie. z.B. Essigsäure, werden die Ferritteilchen freigelegt und können durch Filtrieren abgetrennt werden.

In einem weiteren vorteilhaften Verfahren zur Herstellung des Feststoffs lassen sich die üblichen Salze der bezeichneten Kationen Fe, M, Me und Ma einsetzen. So eignen sich hierzu insbesondere die Nitrate, Formiate, Acetate welche entweder allein oder in Gemischen der verschiedenen Elemente der Gruppe eingesetzt werden, gegebenenfalls zusammen mit entsprechenden Halogeniden oder auch Oxiden, Hydroxiden, Karbonaten.

Beim Einsatz von Titan als Bestandteil des Feststoffs kann es vorteilhaft sein, Titantetrachlorid in Konzentrationen unter 50 Vol.%, im allgemeinen von 10 bis 30 Vol.%, einzusetzen. Als Borkomponente wird üblicherweise Borsäure verwendet, doch lassen sich auch andere Borverbindungen, wie z.B. Borax, heranziehen.

Mit dem erfindungsgemäßen Feststoff steht ein auf einfache und kostengünstige Weise erhältliches Ausgangsmaterial für die Herstellung hexagonaler Ferrite zur Verfügung, mit welchem sich dann die entsprechenden Ferrite mit einer durch die entsprechende Substitution bereits im Feststoff vorher einstellbaren Koezitivfeldstärke, einer geringen und insbesondere einheitlichen Teilchengröße von unter 0,3 µm sowie einer wegen der guten Kristallinität hohen Sättigungsmagnetisierung erhalten lassen. Zudem ist als Vorteil des erfindungsgemäßen Feststoffs anzugeben, daß sich daraus ohne teure Verfahrensschritte diese Ferrite erhalten lassen. Diese Ferrite lassen sich in vorteilhafter Weise als magnetische Materialien bei der Herstellung von magnetischen Aufzeichnungsträgern, magnetischen Tinten oder Tonern in der Reproduktionstechnik sowie in der Mikrowellentechnik als Absorber elektromagnetischer Strahlung verwenden.

Die magnetischen Werte der Materialien wurden in einem Schwingmagnetometer bei einer Feldstärke von 380 kA/m gemessen, und zwar die Koerzitivfeldstärke $H_c$ in [kA/m] sowie die spezifische remanente Magnetisierung $M_{r/\rho}$ und die spezifische Sättigungsmagnetisierung $M_{m/\rho}$ in [nTm³/g]. Die spezifische Oberfläche nach BET wurde gemäß DIN 66 132 mittels eines Ströhlein-Areameters der Fa. Ströhlein, Düsseldorf, BRD, nach dem Einpunkt-Differenz-Verfahren nach Haul und Dümbgen bestimmt.

Beispiel 1

44,75 g NaOH und 81,94 g $Na_2CO_3$ x 10 $H_2O$ werden unter Stickstoff in 1000 ml Wasser bei 40°C gelöst. Dann wird unter kräftigem Dispergieren eine Lösung von 49,91 g $Ba(NO_3)_2$, 6,96 g $Co(NO_3)_2$ x 6 $H_2O$, 125,52 g $Fe(NO_3)_3$ x 9 $H_2O$ und 2,6 ml $TiCl_4$ in 50 ml Isopropanol in 800 ml Wasser bei 40°C während 30 Minuten zugegeben. Der pH-Wert wird mit $HNO_3$/NaOH auf 10 gestellt. Nach dem Abkühlen wird filtriert. Der Rückstand wird dreimal mit je 300 ml Wasser gewaschen und mit 250 ml Wasser und 15,33 g $H_3BO_3$ bei 80°C dispergiert. Die Suspension wird getrocknet, 6 Stunden bei 750°C getempert, anschließend der Glasanteil mit Essigsäure aufgelöst und der Ferrit isoliert.

Die Meßergebnisse waren:
$M_{m/\rho}$ = 60 nTm³/g, Hc = 43 kA/m, $M_r/M_m$ = 0,54, BET 24,4 m²/g.

Vergleichsversuch 1

Es wurde wie in Beispiel 1 beschrieben, verfahren, jedoch ohne den Glasanteil $(BaO)_{1,3}$ x $B_2O_3$. Die Meßergebnisse waren:

BET = 0,7 m²/g
$M_{m/\rho}$ = 28 nTm³/g
$H_c$ = 54 kA/m

Beispiel 2

50,0 g $Ba(NO_3)_2$, 6,13 g $Co(NO_3)_2$ x 6 $H_2O$, 128,81 g $Fe(NO_3)_3$ x 9 $H_2O$, 2,33 ml $TiCl_4$ in 30 ml Isopropanol, 15,33 g $H_3BO_3$ werden in 1500 ml $H_2O$ gelöst (entspricht x, y = 0,7) und sprühgetrocknet. Das Produkt wird 6 h bei 750°C getempert. Nach Abkühlen wird die Glaskomponente durch heiße Essigsäure herausgelöst und der gewonnene Ferrit mit Essigsäure und $H_2O$ gewaschen. Die physikalischen Werte betragen:
$M_{m/\rho}$ = 59 NTm³/g, $H_c$ = 85 kA/m, $M_r/M_m$ = 0,69, BET = 27,4 m²/g.

Beispiel 3

65,3 g $Ba(NO_3)_2$, 9,31 g $Co(NO_3)_2$ x 6 $H_2O$, 168,06 g $FE(NO_3)_2$ x 9 $H_2O$, 3,5 ml $TiCl_4$ in 35 ml Isopropanol, 18,2 g $H_3BO_3$ werden in 2000 ml $H_2O$ gelöst (x, y = 0,8), sprühgetrocknet und 2 h bei 750°C getempert. Die weitere Behandlung erfolgt wie bei Beispiel 2.
$M_{m/\rho}$ = 47 nTm³/g, $H_c$ = 58 kA/m, $M_r/M_m$ = 0,63, BET 27,8 m²/g

Beispiel 4

65,3 g $Ba(NO_3)_2$, 9,31 g $Co(NO_3)_2$ x 6 $H_2O$, 168,06 g $Fe(NO_3)_3$ x 9 $H_2O$, 3,5 ml $TiCl_4$ in 35 ml Isopropanol, 15,6 g $H_3BO_3$ werden in 2000 ml $H_2O$ gelöst (x, y = 0,8) und wie in Beispiel 3 weiterbehandelt.
$M_{m/\rho}$ = 48 nTm³/g, $H_c$ = 76 kA/m, $M_r/M_m$ = 0,66, BET = 29,4 m/g

Beispiel 5

386,2 g $Fe(NO_3)_3$ x 9 $H_2O$ werden in $H_2O$ gelöst, mit $NH_3$ gefällt, mit $H_2O$ gewaschen und bei 80°C in 419 g Citronensäure in 1,3 l $H_2O$ gelöst. Dazu werden 113,11 g $BaCO_3$, 15,74 g $Co(CH_3COO)_2$ x 4 $H_2O$, 7 ml $TiCl_4$ in 25 ml Isopropanol, 45,98 g $H_3BO_3$ gegeben und bis zur vollständigen Lösung aller Komponenten gerührt. Danach werden 112 ml Ethylalkohol zugegeben, und die Lösung wird sprühgetrocknet. Das Produkt wird 6 Stunden bei 750°C getempert und wie in Beispiel 1 weiterbehandelt.
$M_{m/\rho}$ = 42 nTm³/g, $H_c$ = 50 kA/m, $M_r/M_m$ = 0,42, BET = 30,1 m²/g.

**Patentansprüche**

1. Feststoff zur Herstellung hexagonaler Ferrite, bestehend aus einem homogenen Gemisch der Kationen der Zusammensetzung (I)
$M^{2+}[Fe_{(12-2x/3-py/3)}(Me^{2+})_x(Ma^{p+})y]_m[(M^{2+})_zB]_n$ (I)
in der
M = Ba, Sr, Pb
Me = Co, Zn, Ni, Mn, Cu
Ma = Ti, Zr, Hf, Ge, V, Nb, In
p = 3, 4, 5

$x = 0\text{-}3$
$y = 0\text{-}3$
$z = 0{,}2\text{-}3$
$m = 0{,}7\text{-}1{,}5$
$n = 0{,}04\text{-}10$
bedeuten, und wenigstens einem Anion, das zumindest ein thermisch zersetzliches Anion umfaßt.

2. Feststoff gemäß Anspruch 1, dadurch gekennzeichnet, daß der Feststoff als Anion mindestens eines aus der Gruppe der Hydroxide, Karbonate, Nitrate, Formiate und Acetate enthält.

3. Feststoff gemäß Anspruch 1, dadurch gekennzeichnet, daß der Feststoff als Anion mindestens eines aus der Gruppe der Hydroxide, Karbonate, Nitrate, Formiate und Acetate enthält und zusätzlich mindestens eines aus der Gruppe der Halogenide.

4. Verfahren zur Herstellung des Feststoffs gemäß Anspruch 1, dadurch gekennzeichnet, daß zuerst die löslichen Salze der Kationen in der für den Feststoff vorgesehenen Zusammensetzung (I) mit Ausnahme der Borkomponente in Wasser gelöst und mittels einer Base ausgefällt werden, dann der Niederschlag abgetrennt, gewaschen und in einer Lösung oder Aufschlämmung der Borkomponente dispergiert und schließlich der Feststoff zur Trockene gebracht wird.

5. Verfahren zur Herstellung des Feststoffs gemäß Anspruch 1, dadurch gekennzeichnet, daß die Salze der Kationen für die Zusammensetzung (I) in Wasser gelöst und anschließend zur Trockene gebracht werden.

6. Verwendung des Feststoffs gemäß Anspruch 1 zur Herstellung von hexagonalen Ferriten durch Sintern des Feststoffs bei 400 bis 900°C anschließendes Auflösen der Glasmatrix und Abtrennen des Ferrits.

## Claims

1. A solid material for producing hexagonal ferrites, comprising a homogeneous mixture of the cations of the composition (I)

$M^{2+}[Fe_{(12-2x/3-py/3)}(Me^{2+})_x(Ma^{P+})y]_m[(M^{2+})_zB]_n$ (I)

where
M = Ba, Sr, Pb
Me = Co, Zn, Ni, Mn, Cu
Ma = Ti, Zr, Hf, Ge, V, Nb, In
$P = 3, 4, 5$
$x = 0\text{–}3$
$y = 0\text{–}3$
$z = 0.2\text{–}3$
$m = 0.7\text{–}1.5$
$n = 0.04\text{–}10$
and one or more anions comprising one or more thermally decomposable anions.

2. A solid material as claimed in claim 1, which contains as the anion component one or more representatives from the group consisting of the hydroxides, carbonates, nitrates, formates, and acetates.

3. A solid material as claimed in claim 1, which contains as the anion component one or more representatives from the group consisting of the hydroxides, carbonates, nitrates, formates and acetates and additionally one or more representatives from the group consisting of the halides.

4. A process for preparing the solid material as claimed in claim 1, which comprises first dissolving the soluble salts of the cations, in the composition (I) proposed for the solid material, except for the boron component, in water and precipitating them by means of a base, and separating off the precipitate, washing it and dispersing it in a solution or slurry of the boron component, and finally drying the solid material.

5. A process for preparing the solid material as claimed in claim 1, which comprises dissolving the salts of the cations for the composition (I) in water and subsequently drying.

6. The use of the solid material as claimed in claim 1 for producing hexagonal ferrites by sintering the solid material at from 400 to 900°C, and subsequently dissolving the glass matrix and separating off the ferrite.

## Revendications

1. Matière solide pour la préparation de ferrites hexagonaux, constituée d'un mélange homogène des cations de la composition (I)

$M^{2+}[Fe_{(12-2x/3-py/3)}(Me^{2+})_x(Ma^{P+})y]_m[(M^{2+})_zB]_n$ (I)

dans laquelle
M représente Ba, Sr, Pb
Me représente Co, Zn, Ni, Mn, Cu
Ma représente Ti, Zr, Hf, Ge, V, Nb, In
p représente 3, 4, 5
x représente 0–3
y représente 0–3
z représente 0,2–3
m représente 0,7–1,5
n représente 0,04–10
et d'au moins un anion qui englobe au moins un anion décomposable thermiquement.

2. Matière solide selon la revendication 1, caractérisée par le fait que la matière solide contient comme anion au moins un du groupe des hydroxydes, carbonates, nitrates, formiates et acétates.

3. Matière solide selon la revendication 1, caractérisée par le fait que la matière solide contient comme anion au moins un du groupe des hydroxydes, carbonates, nitrates, formiates et acétates et additionnellement au moins un du groupe des halogénures.

4. Procédé de préparation de la matière solide selon la revendication 1, caractérisée par le fait qu'on dissout d'abord dans l'eau les sels solubles des cations dans la composition (I) prévue pour la matière solide, à l'exception du composant bore et on les précipite au moyen d'une base, puis on sépare le précipité, on le lave et le disperse dans une solution ou dispersion du composant bore et enfin on fait sécher la matière solide.

5. Procédé de préparation de la matière solide selon la revendication 1, caractérisé par le fait qu'on dissout dans l'eau les sels des cations pour la composition (I) et ensuite on les fait sécher.

6. utilisation de la matière solide selon la revendication 1 pour la préparation de ferrites hexagonaux par frittage de la matière solide entre 400 et jusqu'à 900 degrés C, ensuite dissolution de la matrice de frittage et séparation du ferrite.